Europäisches Patentamt

European Patent Office

Office européen des brevets

(11) Veröffentlichungsnummer: **0 106 094**
**B1**

(12) **EUROPÄISCHE PATENTSCHRIFT**

(45) Veröffentlichungstag der Patentschrift:
03.02.88

(21) Anmeldenummer: 83108649.1

(22) Anmeldetag: 02.09.83

(51) Int. Cl.⁴: **B 60 R 13/04**

(54) Verstärkungseinlage für im Querschnitt U-förmig profilierte Profilleisten aus Gummi oder Kunststoff, insbesondere Kantenschutzleisten.

(30) Priorität: 08.10.82 DE 3237344

(43) Veröffentlichungstag der Anmeldung:
25.04.84 Patentblatt 84/17

(45) Bekanntmachung des Hinweises auf die Patenterteilung:
03.02.88 Patentblatt 88/5

(84) Benannte Vertragsstaaten:
DE FR GB IT SE

(56) Entgegenhaltungen:
DE-A-2 101 419
FR-A-2 258 514

(73) Patentinhaber: Gebr. Happich GmbH, Postfach 10
02 49 Clausenbrücke 1, D-5600 Wuppertal 1 (DE)

(72) Erfinder: Meissner, Wolfgang, Eickenstrasse 3,
D-5802 Wetter 4 (DE)

EP 0 106 094 B1

## Beschreibung

Die Erfindung bezieht sich auf eine Verstärkungseinlage für im Querschnitt U-förmig profilierte Profilleisten aus Gummi oder Kunststoff, insbesondere Kantenschutzleisten, die aus einem Metallstreifen gebildet ist, welcher aus einzelnen, quer zur Streifenlängsachse im Abstand voneinander angeordneten Sprossen und diese miteinander verbindenden Stegen besteht.

Bei einer durch die DE-A-2 623 317 bekanntgewordenen Verstärkungseinlage kann der sich in Längsrichtung erstreckende Steg bleibend zusammenhängend ausgebildet sein oder nach der Beschichtung der Verstärkungseinlage mit Gummi oder Kunststoff im Bereich zwischen den einzelnen Sprossen gebrochen werden.

Bei Verstärkungseinlagen mit durchgehendem Steg oder Stegen besitzt die damit ausgerüstete Profilleiste keine Längenflexibilität, so daß ein Ausgleich von Längentoleranzen nicht möglich ist. Aber auch Verstärkungseinlagen, bei denen die die Sprossen miteinander verbindenden Stege im Fertigprofil gebrochen sind, sind nicht von Mängeln frei. So können mit einer solchen Verstärkungseinlage ausgerüstete Profilleisten, wegen des fehlenden inneren Verbundes bei der Montage, erheblich gereckt werden, so daß an den Stoßstellen Längenüberdeckungen auftreten können. Weiterhin treten durch den Brechvorgang Maßveränderungen bzw. Verlängerungen im Gesamtprofil auf, die sich nicht gleichmäßig und daher nicht berechenbar zurückstellen, was zu relativ großen Längentoleranzen führen kann. Durch die gebrochenen Stege besitzt die bekannte Verstärkungseinlage auch nicht die Fähigkeit, die natürliche Nachschrumpfung des Profilmaterials zu verhindern. Wie die Erfahrung gezeigt hat, neigen Profilleisten, die mit Verstärkungseinlagen der in Rede stehenden Art ausgerüstet sind, dazu, sich im montierten Zustand mit der Zeit zu kürzen, was auf die schon durch die Jahreszeiten bedingte Wechselwirkung der Temperaturen zurückzuführen ist. Im montierten Zustand rutschen dadurch die Profilleisten mit der Zeit aus den Radien heraus und verursachen damit eine unerwünschte Sehnenbildung.

In der DE-A-2 951 404 ist eine Verstärkungseinlage beschrieben, die eine begrenzte Stauchfähigkeit aufweist, was dadurch erreicht wird, daß der Steg zwischen den einzelnen Sprossen quer zu seiner Längsachse verlaufende und sich über seine Breite erstreckende, ein- oder beidseitig aus der Streifenebene heraustretende Eindrückungen aufweist. Die mit einer derartigen Verstärkungseinlage ausgerüsteten Profilleisten schrumpfen zwar nicht, wie es bei gebrochenen Stegen der Fall ist, nach, jedoch weisen die Profilleisten wegen der aus der Streifenebene der eingelagerten Verstärkungseinlage heraustretenden Eindrückungen zumindest partielle Wandverdickungen auf, was nicht erwünscht ist.

Der Erfindung liegt nun die Aufgabe zugrunde, eine Verstärkungseinlage der eingangs genannten Art dahingehend weiterzubilden, daß eine damit ausgerüstete Profilleiste eine begrenzte Stauchfähigkeit erhält, wobei eine Stauchbarkeit innerhalb der Streifenebene weiterhin angestrebt wird, daß die Verstärkungseinlage eine relativ große Quersteifigkeit aufweist.

Erfindungsgemäß wird diese Aufgabe dadurch gelöst, daß jeder Steg in der Stegmitte eine größere Breite als an den jeweils in eine Sprosse übergehenden Enden und eine, im verkleinerten Maßstab der Stegumrißkontur entsprechende symmetrisch angeordnete Ausstanzung aufweist, wobei die Stegränder jeweils von den Stegenden zur Stegmitte auseinanderlaufen.

Durch die erfindungsgemäße Maßnahme wird jeder Steg in zwei spiegelbildlich gleiche und bei Stauchbeanspruchung quer zur Streifenlängsachse ausknickbare Einzelstege unterteilt. Weiterhin wird eine relativ hohe Quersteifigkeit erzielt, was im Hinblick auf die bei der Extrusionsverarbeitung auftretenden Biegemomente äußerst wichtig ist.

Jeder Steg kann durch eine etwa rombenförmige Ausstanzung in zwei V-förmige oder durch eine etwa kreis- oder ellipsenförmige Ausstanzung in zwei gekrümmte Einzelstege unterteilt sein. Dabei kann die Neigung bzw. Winkelstellung der Einzelstege zur Streifenlängsachse den jeweiligen Erfordernissen in bezug auf Stauchbarkeit und Gesamtwiderstandsmoment angepaßt werden. Durch die vorzugsweise vorgesehene quersymmetrische Anordnung der Einzelstege tritt vorteilhafterweise kein Seitenversatz der Sprossen bei Stauchung auf. Weiterhin ist durch die erfindungsgemäße Gestaltung der Einzelstege sichergestellt, daß sie bei einer Stauchbeanspruchung nicht aus der Streifenebene heraustreten.

Ausführungsbeispiele der Erfindung werden nunmehr anhand der Zeichnung näher erläutert. Es zeigen

Fig. 1 bis 4 jeweils die Draufsicht auf eine Verstärkungseinlage mit unterschiedlich ausgebildeten Stegen und

Fig. 5 die Draufsicht auf eine Verstärkungseinlage im gestauchten Zustand.

Die neue Verstärkungseinlage ist aus einem metallischen Flachband gebildet. Durch eine Stanzbearbeitung des Flachbandes weist dieses eine Gitterstruktur auf und besteht aus einzelnen, quer zur Flachbandebene im Abstand voneinander angeordneten Sprossen 1 und diese jeweils miteinander verbindenden Stegen 2, die sich auf einer gemeinsamen Längsachse befinden.

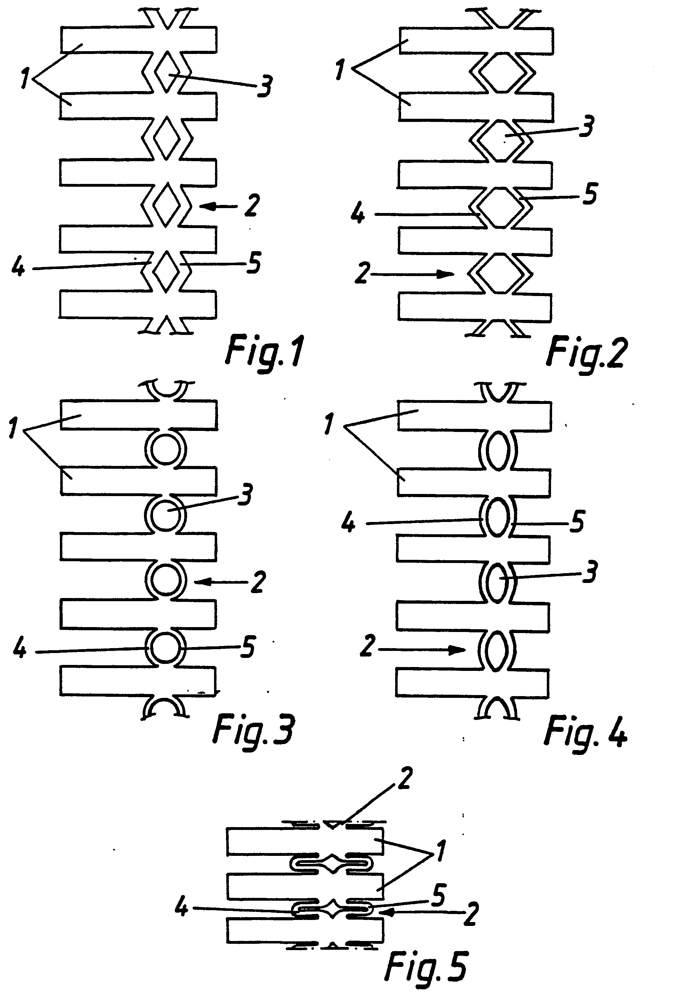

Die Stege 2 weisen jeweils in der Stegmitte eine wesentlich größere Breite als an den jeweils in eine Sprosse 1 übergehenden Enden auf. Die Breitenänderung kann, wie in Fig. 1 und 2 gezeigt, jeweils linear oder, wie in Fig. 3 und 4 gezeigt, kurvenförmig verlaufen. Jeder Steg 2 weist eine Ausstanzung 3 auf, die im verkleinerten Maßstab der Stegumrißkontur angepaßt und symmetrisch angeordnet ist. Die Ausstanzungen 3 können ebenso wie die Umrißkonturen der Stege 2 unterschiedlich sein. In Fig. 1 sind z. B. rombenförmige Ausstanzungen 3 vorgesehen. Die Ausstanzungen 3 nach Fig. 2 besitzen die Form eines Vielecks, die nach Fig. 3 die Form eines Kreises und die nach Fig. 4 die Form einer Ellipse.

Wesentlich ist, daß die Stege 2 durch die Ausstanzungen 3 in zwei spiegelbildlich gleiche Einzelstege 4, 5 unterteilt sind, die bei einer Stauchbeanspruchung quer zur Streifenlängsachse nach außen ausknicken können, wie dies durch Fig. 5 verdeutlicht ist. In Fig. 1 und 2 sind die Einzelstege 4, 5 jeweils V-förmig gestaltet, während die Einzelstege 4, 5 nach Fig. 3 und 4 bogenförmig gekrümmt ausgebildet sind.

## Patentansprüche

1. Verstärkungseinlage für im Querschnitt U-förmig profilierte Profilleisten aus Gummi oder Kunststoff, insbesondere Kantenschutzleisten, die aus einem Metallstreifen gebildet ist, welcher aus einzelnen, quer zur Streifenlängsachse im Abstand voneinander angeordneten Sprossen (1) und diese miteinander verbindenden Stegen (2) besteht, dadurch gekennzelchnet, daß jeder Steg (2) in der Stegmitte eine größere Breite als an den jeweils in eine Sprosse (1) übergehenden Enden und eine, im verkleinerten Maßstab etwa der Stegumrißkontur entsprechende, symmetrisch angeordnete Ausstanzung (3) aufweist, wobei die Stegränder jeweils von den Stegenden zur Stegmitte auseinanderlaufen.

2. Verstärkungseinlage nach Anspruch 1, dadurch gekennzeichnet, daß jeder Steg (2) durch eine etwa rombenförmige Ausstanzung (3) in zwei V-förmige Einzelstege (4, 5) unterteilt ist.

3. Verstärkungseinlage nach Anspruch 1, dadurch gekennzelchnet, daß jeder Steg (2) durch eine etwa kreisoder ellipsenförmige Ausstanzung (3) in zwei gekrümmte Einzelstege (4, 5) unterteilt ist.

## Claims

1. A reinforcing insert for a cross-sectionally U-shaped profiled strip of rubber or of a synthetic material, especially for an edge protection strip, the insert being made of a metal strip consisting of individual ribs (1) spacedly arranged transversely to the insert strip's longitudinal extent and of fillets (2) joining the ribs to one another, characterized in that each fillet (2) is wider at its mid-length than at its opposite ends each of which passed into a respective one of two ribs (1), that each fillet (2) has a punched-out hole (3) smaller than but substantially corresponding in shape to and being disposed symmetrically with the fillet's contour, and in that each fillet's edges diverge from its respective ends to its mid-length.

2. A reinforcing insert according to claim 1, characterized in that the punched-out hole (3) of each fillet (2) is substantially rhombic and partitions the fillet into two separate V-shaped fillets (4, 5).

3. A reinforcing insert according to claim 1, characterized in that the punched-out hole (3) of each fillet (2) is substantially round or elliptical and partitions the fillet into two separate curved fillets (4, 5).

## Revendications

1. Garniture de renforcement pour bandes profilées de section en U en caoutchouc ou matière plastique, notamment de bandes de protection d'arêtes, formée à partir d'une bande de métal, constituée de barrettes (1) individuelles disposées à distance les unes des autres transversalement à l'axe longitudinal de la bande et d'entretoises (2) les reliant les unes aux autres, caractérisée en ce que chaque entretoise (2) présente en son centre une largeur plus importante qu'au niveau de ses extrémités qui sont raccordées chacune à une barrette ainsi qu'une découpe (3) disposée symétriquement et correspondant à échelle réduite au contour extérieur de l'entretoise, les bords de l'entretoise allant respectivement en s'écartant l'un de l'autre depuis les extrémités de l'entretoise jusqu'à sa partie centrale.

2. Garniture de renforcement selon la revendication 1, caractérisée en ce que chaque entretoise (2) est subdivisée en deux entretoises individuelles en V (4, 5) par une découpe de forme sensiblement rhomboïdale (3).

3. Garniture de renforcement selon la revendication 1, caractérisée en ce que chaque entretoise (2) est subdivisée en deux entretoises individuelles de forme courbe (4, 5) par une découpe (3) de forme sensiblement circulaire ou elliptique.

Fig.1

Fig.2

Fig.3

Fig.4

Fig.5